# EUROPÄISCHE PATENTSCHRIFT

(11) **EP 2 166 361 B1**
(45) Veröffentlichungstag und Bekanntmachung des Hinweises auf die Patenterteilung: **27.03.2013**
(21) Anmeldenummer: 09405138.0
(22) Anmeldetag: 14.08.2009
(51) Int. Cl.: G01N 35/10, G01N 1/00

(54) **Probenaufgabevorrichtung**
Sample dispensing device
Dispositif de dépôt d'échantillons

(30) Priorität: 15.08.2008 CH 12902008
(43) Veröffentlichungstag der Anmeldung: 24.03.2010
(60) Teilanmeldung: 13000368.4
(73) Patentinhaber: CTC Analytics AG, 4222 Zwingen (CH)
(72) Erfinder: Döbelin, Werner, 4153 Reinach (CH); Maetzke, Thomas, 4142 Münchenstein (CH); Van Tilburg, Chris C. E., 4424 EK Wemeldinge (NL)
(74) Vertreter: Rüfenacht, Philipp Michael

(56) Entgegenhaltungen:
- EP-A- 0 651 255
- EP-A- 1 624 301
- DE-A1- 4 314 180
- US-A1- 2007 095 158

## Beschreibung

### Technisches Gebiet

Die Erfindung betrifft eine Vorrichtung zur Aufnahme einer Probe und zur Abgabe der Probe in einen Probenaufnahmeeingang eines Messgeräts, umfassend ein erstes Anschlusselement mit drei Fluid-Anschlüssen und ein zweites Anschlusselement sowie eine Hohlnadel (5) zur Aufnahme und Abgabe der Probe, wobei eine erste Zuleitung für eine erste Waschflüssigkeit über eine erste Pumpe mit einem ersten Fluid-Anschluss des ersten Anschlusselements und eine zweite Zuleitung für eine zweite Waschflüssigkeit über eine zweite Pumpe mit einem zweiten Fluid-Anschluss des ersten Anschlusselements verbunden ist.

### Stand der Technik

Die Aufgabe einer solchen Vorrichtung (auch als Probenaufgabevorrichtung, Autosampler oder Probenaufgabesystem bezeichnet) ist es, Proben (Samples) einer Messanordnung wie beispielsweise einem Chromatographen zuzuführen.

Aus der EP 0 651 255 A1 (Hoffmann La Roche) ist eine automatische Pipetiervorrichtung mit entsprechender Dosier- bzw. Transporteinrichtung für die Pipetiernadel 11 bekannt, welche durch einen ersten Schlauch 12 und eine erste T-Verbindung 13 mit einer Dosierspritze 14 verbunden ist (Sp. 1, Z. 1). Ein Arm der ersten T-Verbindung 16 ist mit einer Reinigungseinrichtung verbunden (Sp. 2 Z. 10). Die Pipetiervorrichtung enthält weiter eine Kolbenpumpe 24, welche durch eine zweite T-Verbindung 23 und ein Ventil 21 mit der ersten T-Verbindung 13 verbunden ist (Sp. 2 Z. 16). Die zweite T-Verbindung 23 ist über ein zweites Ventil 31 mit einem Behälter 33 mit Reinigungsflüssigkeit 34 verbunden (Sp. 2, Z. 20). Eine Steuereinrichtung 41 steuert die beiden Ventile 13, 23 und die Kolbenpumpe 24 (Sp. 2, Z. 24). Das zweite Ventil 31 kann auch als Rückschlagventil ausgebildet sein (Sp. 2, Z. 36). Weiter umfasst die Pipetiervorrichtung eine Transporteinrichtung welche eine Stange 52 und einen Transportwagen 51 enthält, womit die Pipetiernadel 11 in drei Raumrichtungen bewegbar ist (Sp. 3, Z. 25). In einer Reinigungsposition wird Reinigungsflüssigkeit durch die Pipetiernadel in einen Behälter 38 gepumpt (Sp. 3, Z. 43). Die Schläuche 22, 28, 29 bestehen aus nicht deformierbarem Material, zum Beispiel aus Polyethylen (Sp. 5, Z. 46).

Die DE 43 14 180 A1 (Olympus Optical) offenbart eine Vorrichtung zum Abgeben von Proben in ein Reaktionsgefäss (Sp. 1, Z. 1). Die Vorrichtung weist eine Wascheinrichtung zum Waschen einer Einweg-Einheit 20, die abnehmbar an der Spitze 20a einer Proben-Abgabesonde befestigt ist, sowie eine Entfernungseinrichtung zum Entfernen der Einweg-Einheit 20 und eine Steuereinheit zum wahlweise Betätigen der Wascheinrichtung respektive der Entfernungseinrichtung auf (Sp. 1, Z. 68). Die Einweg-Einheit 20 ist mit einer Spritze 21 verbunden (Sp. 3, Z. 56). Die Einweg-Einheit 20 wird sowohl in horizontaler wie auch in vertikaler Ebene bewegt (Sp. 3, Z. 58). Bereitgestellt sind ein Wassertank 11 und ein Tank 12 mit Waschmittel sowie Pumpen 13, 14 zum Einbringen des Wassers und des Waschmittels in den Waschtank 19 respektive in die Spritze 21, wozu die Ventile 15-18 dienen (Sp. 4, Z. 32). Im Waschbetrieb wird die Einweg-Einheit 20 in einem Waschtank 19 aussen und anschliessend durch Einsaugen von Waschmittel mittels der Spritze 21 und anschliessendem Ausstossen durch die Einweg-Einheit 20 innen gewaschen (Sp. 4, Z. 41).

Die EP 1 624 301 A1 (Shiseido) zeigt eine Probeninjektionapparatur für einen LC (liquid chromatograph) [0001]. Die Autosampler-Vorrichtung umfasst eine Nadel 10, eine Spritze 11, eine Pumpe für die Reinigungsflüssigkeit 12, ein Ventil 13, einen Probenbehälter 14, ein Injektionsventil 15, einen Loop 16, eine Reinigungsvorrichtung 17, einen Reinigungsmittelbehälter 18 und eine Vorrichtung zum Transportieren der Nadel [0051]. Die Reinigungsflüssigkeit im Behälter 18 wird mittels der Pumpe 12 je nach Stellung des Ventils 13 kontinuierlich zur Reinigungsvorrichtung 17 oder zur Nadel 10 gepumpt [0051]. Die Nadel 10 wird beim Injektionsport 19, welcher mit dem Loop 16 verbunden ist, des Injektionsventils 15 eingeführt, um die Probe oder das Reinigungsmittel zu injizieren [0051]. Unmittelbar bevor die Probe injiziert wird, wird die Nadel 10 in einer Reinigungsvorrichtung 17 aussen gewaschen, anschliessend wird die Probe über einen Injektionsport 19 in einen Loop 16 gespritzt, worauf ein Ventil so umgeschaltet wird, dass die Probe in die Säule 105 gelangt [0004]. Unmittelbar nach der Injektion der Probe wird die Innenseite der Nadel 10 gewaschen, indem Reinigungsflüssigkeit durch die Nadel 10 gespült wird [0007]. Für eine Nachwaschung nach der Injektion wird bei einem Reinigungsport 24 Reinigungsflüssigkeit in die Nadel 10 aufgezogen, um sie im Injektionsport 19 des Injektionsventils 15 wiederholt auszustossen und wieder aufzuziehen, um auch die Probeninjektionsroute im Injektionsventil 15 zu reinigen, wobei der Injektionsport 19 mit dem Wastebehälter 23, aber nicht mit dem Loop verbunden ist und wobei zwei oder mehr Reinigungsports 24 verwendet werden können [0008]. Statt mittels Aufziehen und Ausstossen von Reinigungsflüssigkeit kann die Reinigung der Nadel 10 auch mittels Ultraschall erfolgen [0012], [0025]. In Fig. 12 macht die Nadel 10 einen Teil der Leitung 25 aus, so dass zwei Ports des Injektionsventils 15 verbunden werden können, wobei zur Probenaufnahme und zur Reinigung die Nadel 10 entkoppelt werden und mit einer Transportvorrichtung zum Probenbehälter 14 respektive zur Reinigungsvorrichtung 17, 17' geführt werden kann [0061].

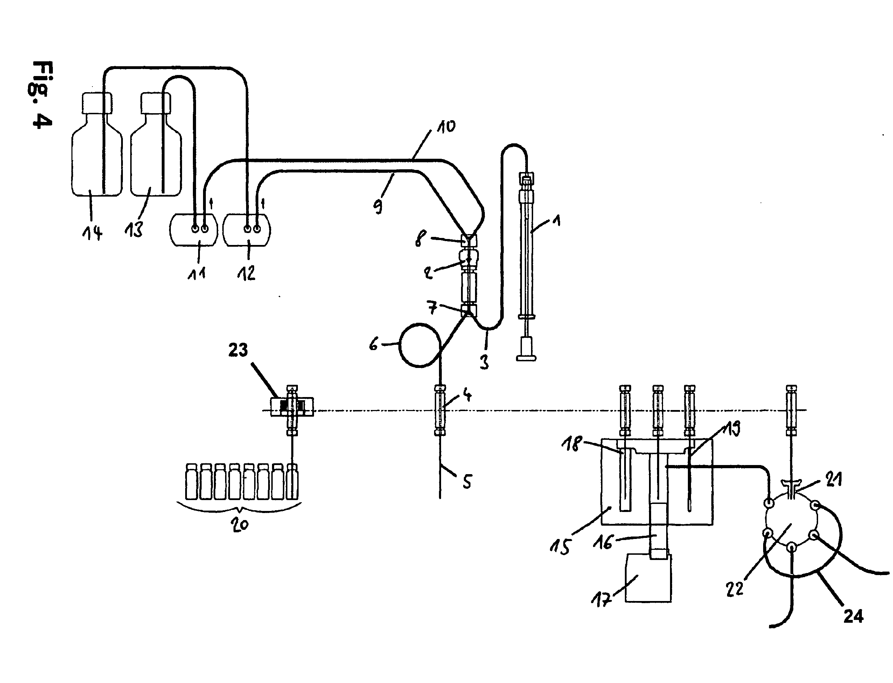

Aus der US 7,219,566 B1 von Shimadzu ist ein Probenaufgabesystem bekannt. Dieses umfasst ein Injektionsventil (4), welches als Hochdruck-Drehventil mit mehreren Ein-/Ausgängen ausgebildet ist. Weiter umfasst es ein Niederdruck-Ventil (5), welches ebenfalls als Drehventil mit mehreren Ein-/Ausgängen ausgebildet ist. Eine Hohlnadel (10) ist beweglich montiert und kann zwischen den Probenflaschen (11), der Waschstation (8) und dem Injektionsport (9) am Injektionsventil (4) verfahren werden. Zur Aufnahme der Probe mit der Hohlnadel wird mit dem Niederdruckventil eine im Gegensatz zur Hohlnadel fest, d. h. nicht beweglich montierte Messpumpe (6) an die Hohlnadel angeschlossen und die Probe wird in einen sogenannten Sample-Loop (7) gesogen und dort zwischengespeichert. Beim Umherfahren der Hohlnadel wird nun dieser Sample-Loop bewegt, weshalb dieser flexibel ausgebildet sein muss. Dies kann sich aufgrund von unterschiedlichen Ausdehnungen des Sample-Loop (beispielsweise aufgrund von Temperatur- oder Druckschwankungen etc.) negativ auf die Dosiergenauigkeit und die Dosierreproduzierbarkeit auswirken. Weiter werden die mit Probe verunreinigten Teile der Vorrichtung gereinigt, indem mit der Messpumpe via Niederdruckventil Waschflüssigkeit (Cleaning Solution - Fig. 4) angesogen und nach einer Umschaltung des Niederdruckventils in die Waschstation entleert wird, wo die Hohlnadel zur Reinigung eingetaucht wird. Entsprechend muss die Messpumpe mehrfach mit Waschflüssigkeit gefüllt werden, wenn eine Waschflüssigkeitsmenge benötigt wird, die das Volumen der Messpumpe übersteigt. Diese dauert nicht nur lange, sondern hat auch eine grössere Abnützung der Teile zur Folge. Des Weiteren muss die Hohlnadel zur Reinigung jeweils zur Waschstation gefahren werden.

### Darstellung der Erfindung

Durch immer empfindlicher werdende Messinstrumente (Detektoren) ergibt sich der Bedarf nach Probenaufgabesystemen welche hinsichtlich Verschleppung (Crosscontamination), Wiederholgenauigkeit (Reproduzierbarkeit), Geschwindigkeit und Langlebigkeit (Robustheit) wesentlich besser sein müssen als herkömmliche Systeme.

Die Vorrichtungen gemäss dem Stand der Technik haben den Nachteil, dass die Injektionsnadel nicht effizient gereinigt werden kann. Weiter kann eine Verschleppung des Probenmaterials nur teilweise verhindert werden. Schliesslich ist das aufzunehmende Probenvolumen nicht in optimaler Weise reproduzierbar.

Aufgabe der Erfindung ist es daher, eine dem eingangs genannten technischen Gebiet zugehörende Vorrichtung bzw. ein entsprechendes Reinigungsverfahren zu schaffen, welche eine möglichst geringe Verschleppung bei gleichzeitig hoher Genauigkeit, Geschwindigkeit und Langlebigkeit ermöglicht.

Die Lösung der Aufgabe ist durch die Merkmale des Anspruchs 1 definiert. Erfindungsgemäss ist ein Fluid-Anschluss des zweiten Anschlusselements mit dem dritten Fluid-Anschluss des ersten Anschlusselements und das zweite Anschlusselement mit einer Dosiervorrichtung und der Hohlnadel verbunden, und zwischen dem dritten Fluid-Anschluss des ersten Anschlusselements und dem zweiten Anschlusselement ist ein Ventil angeordnet.

Die Dosiervorrichtung ist hierbei zur Aufnahme und Abgabe der Probe durch die Hohlnadel hindurch mit dieser verbunden.

Dieser Aufbau ermöglicht nicht nur eine schnelle und einfache Spülung der Hohlnadel und der mit der Hohlnadel bzw. der Probe in Berührung kommenden Teile der Vorrichtung wie beispielsweise das Injektionsventil, durch welches hindurch die Probe an das Messgerät abgegeben wird, sondern auch eine Spülung der Hohlnadel, solange diese noch im Injektionsport des Injektionsventils steht, d. h. ohne die Hohlnadel zuerst vom Injektionsport entfernen zu müssen.

Zudem ermöglicht die erfindungsgemässe Anordnung der einzelnen Teile der Vorrichtung das im Wesentlichen ununterbrochene, respektive kontinuierliche Reinigen der Vorrichtung, da mit der ersten und/oder der zweiten Waschpumpe solange Waschflüssigkeit durch die Hohlnadel hindurch gepumpt werden kann, bis die Nadel gereinigt oder schliesslich ein Vorrat an Waschflüssigkeit erschöpft ist. Natürlich kann in letzterem Fall, je nach Ausbildung der Vorrichtung während des Betriebs auch ein Vorrat an Waschflüssigkeit nachgefüllt werden.

Durch Aktivierung der Pumpen wird es möglich, die Vorrichtung bzw. Teile davon sehr schnell und einfach und mit beliebigen Mengen zweier verschiedener Waschflüssigkeiten (Lösungsmitteln), beispielsweise einer wässrigen und einer organischen Waschflüssigkeit, zu reinigen, ohne dass hierfür ein Ventil umgeschaltet werden muss. Zudem wird das Durchspülen der Hohlnadel und des Injektionsventils ermöglicht, während die Hohlnadel im Injektionsport steht ohne dass die Hohlnadel bewegt werden muss.

Durch die Ausbildung eines Ventils zwischen dem dritten Fluid-Anschluss des ersten Anschlusselements und dem zweiten Anschlusselement kann ein Rückflusses eines Fluids (Probe, Waschflüssigkeit) in Richtung einer Zuleitung einer Waschflüssigkeit verhindert werden. Insbesondere kann dadurch die Vorrichtung besonders einfach gehalten werden, da abgesehen vom Probeneingang zum Messgerät kein weiteres Ventil zwingend benötigt wird. So können mit nur einem Ventil die mehreren Waschflüssigkeiten angesteuert werden, in dem die entsprechende Pumpe aktiviert und das Ventil geöffnet wird. Um den Rückfluss aktiv verhindern zu können, kann dazu ein gesteuertes Ventil eingesetzt werden.

Die Pumpen sind vorzugsweise so ausgebildet, dass sie Waschflüssigkeiten kontinuierlich fördern können. Die Pumpen können als Schlauchquetschpumpen, Membranpumpen, Rotationskolbenpumpen, Drehkolbenpumpen, Drehschieberpumpen, Kreiskolbenpumpen, Zahnradpumpen oder als Kolbenpumpen, insbesondere als Axialkolbenpumpen oder Hubkolbenpumpen ausgebildet sein.

Die Hohlnadel kann dazu als zylindrisches Hohlelement ausgebildet sein, insbesondere als Kanüle, wobei die Kanüle eine Austrittsöffnung umfasst, welche gerade und/oder abgeschrägt sein kann. Damit kann die Hohlnadel einfach zum Beispiel durch eine Membrane gestossen werden. Weiter können auch Einwegaufsätze verwendet werden.

Das Ventil ist vorzugsweise als Magnetventil, insbesondere als Magnetventil mit einem Nennvolumen kleiner als 0.1 ml ausgebildet. Ein Magnetventil ist ein Ventil, das von einem Elektromagneten betätigt wird. Die Verwendung eines Magnetventils hat gleich mehrere Vorteile:
1. Magnetventile sind steuerbar und können damit unabhängig von einem Leitungsdruck geschalten werden.
2. Magnetventile weisen kleine Schaltzeiten auf, insbesondere können Schaltzeiten im Bereich von Millisekunden erreicht werden.
3. Schaltfrequenzen im Kiloherzbereich sind möglich.
4. Magnetventile sind in kompakter Bauweise verfügbar.
5. Magnetventile sind wartungsarm.

Als Beispiel für eine Ausführung eines Magnetventils sei hier auf die Flipper-Magnetventile der Firma Bürkert verwiesen, welche sich durch besonders kleine Abmessungen (4.5 mm Breite und 38.5 mm Tiefe), kleines internes Volumen (0.03 ml) und durch eine Schaltfrequenz von bis zu 80Hz auszeichnet. Dem Fachmann sind aber eine Vielzahl von ähnlichen Magnetventilen bekannt, welche genauso eingesetzt werden können. Insbesondere können auch grössere oder kleinere Magnetventile verwendet werden, falls der Raum nicht beschränkt ist oder falls eine kostengünstigere Ausführung erwünscht ist. Weiter kann das interne Volumen je nach Anwendung auch anders gewählt werden, wobei jedoch ein kleineres internes Volumen grundsätzlich zu bevorzugen ist. Die Schaltfrequenz kann auch kleiner als 80Hz sein, ohne nennenswerte Verluste in der Genauigkeit hinnehmen zu müssen. Schaltfrequenzen um 80Hz oder höher sind aber natürlich zu bevorzugen.

Weiter kann bei der Vorrichtung auch ein anderes Ventil zwischen dem dritten Fluid-Anschluss des ersten Anschlusselements und dem zweiten Anschlusselement angeordnet sein. Zum Beispiel könnte ein Rückschlagventil zur Verhinderung eines Rückflusses eines Fluids (Probe, Waschflüssigkeit) in Richtung einer Zuleitung, insbesondere als federunterstütztes Kugel- oder Membran(rückschlag)ventil (spring-loaded check valve) ausgebildet sein. Der Druck der Feder des Ventils ist typischerweise kleiner als 1 bar, vorzugsweise etwa 0.3 bar. Dieser Druck muss von der Waschpumpe überwunden werden, um die Waschflüssigkeit durch das Rückschlagventil hindurch zu pumpen. Der Druck der Feder darf allerdings auch nicht zu gering sein, da sich das Ventil durch einen leichten, ausgangsseitigen Unterdruck, wie dies durch einen Kolbenhub des Dilutors (der nachfolgend auch als Spritze bezeichnet wird) entstehen kann, nicht öffnen darf. Diese Probleme können durch den Einsatz eines gesteuerten Ventils, insbesondere eines Magnetventils behoben werden.

Dieses Magnetventil ersetzt das beim Stand der Technik gemäss US 7,219,566 B1 vorhandene Drehventil (5).

Bevorzugt umfasst das zweite Anschlusselement drei Fluidanschlüsse, wobei ein erster Fluidanschluss des zweiten Anschlusselements mit dem Ventil, ein zweiter Fluidanschluss des zweiten Anschlusselements mit der Dosiervorrichtung und ein dritter Fluidanschluss des zweiten Anschlusselements mit der Hohlnadel verbunden ist. In einem ersten Zustand ist das Ventil geschlossen, womit bei einer Aktivierung der Dosiervorrichtung zum Beispiel eine Flüssigkeit über das zweite Anschlusselement durch die Hohlnadel pumpbar ist, ohne dass die Flüssigkeit mit einer Waschflüssigkeit in Kontakt kommt. In einem zweiten Zustand ist das Ventil geöffnet. In diesem Zustand wird die Dosiervorrichtung typischerweise nicht aktiviert, da durch Sogwirkung (Bernoulliprinzip) der betätigten Dosiervorrichtung über das zweite Anschlusselement Waschflüssigkeit angesaugt werden könnte, insbesondere, wenn die Pumpen keine Rücklaufsicherung aufweisen. Im zweiten Zustand, das heisst bei offenem Ventil, wird typischerweise eine Reinigung durchgeführt. Dabei wird mittels der ersten und/oder der zweiten Pumpe Waschflüssigkeit durch das erste Anschlusselement über das Ventil und das zweite Anschlusselement durch die Hohlnadel hindurch gepumpt. Durch diese Anordnung kann die Dosiervorrichtung bei einem Reinigungsvorgang ausgekoppelt werden. Dadurch kann mit konstruktiv einfachen Mitteln verhindert werden, dass Waschflüssigkeit in die Dosiervorrichtung gelangt.

Weiter kann das zweite Anschlusselement auch durch die Dosiervorrichtung selbst oder einen Teil davon realisiert sein. Dazu würde der Ausgang des Ventils direkt mit der Dosiervorrichtung verbunden, das heisst, zwischen dem Ventil und der Dosiervorrichtung wäre eine Fluid-Verbindung vorgesehen. Die Hohlnadel würde dann separat mit der Dosiervorrichtung über eine weitere Fluid-Verbindung verbunden werden. Dies hätte aber den Nachteil, dass die Dosiervorrichtung zwangsläufig mit Waschflüssigkeit kontaminiert werden würde.

Vorzugsweise umfasst die Dosiervorrichtung einen Spritzenkörper und einen Stössel und ist insbesondere motorisch betätigbar. Dazu umfasst die Dosiervorrichtung eine Linearführung. Der Stössel kann dazu zum Beispiel eine Zahnstange in dessen Längsrichtung umfassen, welche mit einem Zahnrad eines Motors, insbesondere eines Schrittmotors, zusammenwirkt. Damit kann der Stössel mittels einer Betätigung des Motors in dessen Längsrichtung verschoben und damit können besonders präzise Hübe ausgeführt werden, wodurch ein zu dosierendes Volumen genau eingestellt werden kann. Weiter wird durch den motorischen Betrieb der Dosiervorrichtung auch eine Steuerung mittels eines Computers ermöglicht, womit auch komplexere Abläufe der Vorrichtung gesteuert und insbesondere automatisiert werden können. Statt des Stössels kann auch der Spritzenkörper mittels einer Linearführung bewegt werden. Die Spritze kann grundsätzlich beliebig orientiert sein. Bevorzugt ist sie jedoch vertikal, mit einer Austrittsöffnung nach unten angeordnet.

Statt einer motorischen Betätigung ist auch eine pneumatische oder eine manuelle Betätigung der Dosiervorrichtung denkbar. Ein pneumatischer Antrieb ist insbesondere dann denkbar, wenn das zu dosierende Volumen nicht regelmässig geändert wird. In diesem Fall kann nämlich die Dosiervorrichtung bezüglich der Pneumatik einen Anschlag aufweisen, welche eine Bewegung der Pneumatik begrenzt und damit das zu dosierende Volumen definiert. Der Anschlag kann dazu verstellbar ausgebildet sein, so dass verschiedene Volumina dosierbar sind.

Bevorzugt ist die Dosiervorrichtung auswechselbar ausgebildet, insbesondere durch Dosiervorrichtungen verschiedener Volumina ersetzbar. Damit wird eine besonders flexibel einsetzbare Vorrichtung erreicht. Typischerweise sind die zu analysierenden Volumina nicht immer gleich gross. Je nach Konzentration oder Art des zu untersuchenden Stoffes wird daher ein unterschiedliches Volumen an Probenmaterial untersucht. Durch die auswechselbar ausgestaltete Dosiervorrichtung können zum Beispiel verschiedene Spritzen, umfassend den Spritzenkörper und den Stössel, mit verschiedenen maximalen Volumina zur Verfügung stehen, so dass die Vorrichtung den jeweiligen Messungen und damit zu dosierenden Volumina angepasst werden kann. Insbesondere kann damit eine relative Genauigkeit des zu dosierenden Volumens auch bei unterschiedlichen Volumina aufrecht erhalten werden.

Alternativ, insbesondere für den Einsatz bei Routineanalysen, kann auch auf ersetzbare Dosiervorrichtungen verzichtet werden und unter Umständen dadurch die Vorrichtung kostengünstiger hergestellt werden. Dabei müssten aber möglicherweise der Verlust der obig erwähnten Vorteile, insbesondere der Verlust an Flexibilität in der Anwendung, in Kauf genommen werden.

Vorzugsweise sind die Hohlnadel, die Dosiervorrichtung und das Ventil auf einer verfahrbaren Halterung befestigt. D. h. die Hohlnadel, die Dosiervorrichtung und das Ventil sind gegenseitig räumlich fixiert, sodass sie bei einer Bewegung der Halterung gemeinsam bewegt werden. Durch die gegenseitige räumliche Fixierung, insbesondere der Hohlnadel und der Dosiervorrichtung, wird erreicht, dass keine flexible Fluidleitung zwischen der Hohlnadel und der Dosiervorrichtung vorgesehen sein muss. Dies hätte nämlich den Nachteil, dass bei einem Verfahren der Hohlnadel zwischen den Probenbehältern und dem Injektionsventil die flexible Fluidleitung gebogen würde, womit unkontrollierbare Volumenänderungen auftreten können. Dies wiederum hätte einen negativen Einfluss auf eine Reproduzierbarkeit von Probenabgaben in Probenaufnahmeeingängen in Messgeräten. Gemäss dieser Ausführung sind also lediglich die Zuleitungen für die Waschflüssigkeiten flexibel ausgebildet.

Es könnten auch das Injektionsventil und die Probenbehälter verfahrbar ausgebildet sein. Damit würde aber das Problem nur scheinbar gelöst, da Verbindungselemente zwischen dem Injektionsventil und dem Messgerät flexibel ausgebildet sein müssten. Zudem wäre der konstruktive Aufwand erheblich grösser.

Vorzugsweise ist die Halterung in drei verschiedenen Raumrichtungen verfahrbar. Dies ist insbesondere dann von Vorteil, wenn die Probenbehälter in mehreren Reihen angeordnet sind. Die Verfahrbarkeit der Halterung kann mit drei Linearführungen erreicht werden, welche zum Beispiel mit Schrittmotoren angetrieben sind. Der Antrieb kann mittels einer Kombination von Zahnstangen und Antriebsritzel oder mittels einer seilzugähnlichen Vorrichtung erfolgen. Anderseits ist auch eine Montage an einem gelenkigen Roboterarm denkbar.

Falls die Probenbehälter in nur einer Reihe angeordnet sind, d. h., wenn typischerweise wenige Probenbehälter verwendet werden, kann eine Verfahrbarkeit in zwei Raumrichtungen ausreichen, wobei die beiden Raumrichtungen in einer vertikalen Ebene orientiert sind und die Probenbehälter horizontal in derselben Ebene angeordnet sind.

Die beiden Anschlusselemente sind bevorzugt auf der verfahrbaren Halterung befestigt. Dadurch, dass die beiden Anschlusselemente auf der verfahrbaren Halterung befestigt sind, wird erreicht, dass auch sie bei einer Bewegung der Halterung gemeinsam mit der Hohlnadel, der Dosiervorrichtung und dem Ventil bewegt werden. Weiter wird damit zwischen den beiden Anschlusselementen ein Volumen gering gehalten, womit schneller zwischen den zwei Waschflüssigkeiten gewechselt werden kann, ohne dass eine grössere Menge der vorherigen Waschflüssigkeit durchgespült werden muss.

Entsprechend müssen die Hohlnadel, das Ventil, die Anschlusselemente und die Dosiervorrichtung nicht gegeneinander bewegt werden, sodass eine verbesserte Dosiergenauigkeit und Dosierwiederholbarkeit erreicht werden kann.

D. h. die einzige Verbindung zwischen den mit der Halterung beweglichen Komponenten und den nicht beweglichen Komponenten der Vorrichtung sind die Zuleitungen für die Waschflüssigkeiten. Entsprechend sind diese flexibel ausgebildet.

Das erste Anschlusselement kann auch fix angeordnet sein, womit nur eine flexible Leitung zum Ventil geführt werden müsste. Dies hätte aber den Nachteil, dass das Volumen zwischen den beiden Anschlusselementen grösser wäre und dadurch beim Wechseln zwischen den Waschflüssigkeiten eine grössere Zeitspanne vergeht, bis die andere Waschflüssigkeit zu der Hohlnadel gelangt. Des Weiteren kann sich dadurch eine Vermischung der beiden Waschflüssigkeiten über ein grösseres Volumen ergeben.

Vorzugsweise ist eine erste Fluid-Verbindung zwischen dem Fluidanschluss des zweiten Anschlusselements und der Dosiervorrichtung und/oder eine zweite Fluid-Verbindung zwischen dem zweiten Anschlusselements und der Hohlnadel aus einem starren Material, insbesondere aus einem Metall oder einem festen Kunststoff, ausgebildet. Dadurch wird eine besonders hohe Genauigkeit und Reproduzierbarkeit der zu dosierenden Volumina erreicht, da sich die Fluid-Verbindungen nicht verformen können. Um eine besonders kompakte, stabile und konstruktiv einfache Ausführung zu erhalten, können die Fluid-Verbindungen als Bohrungen in einem massiven Element aus Metall oder Kunststoff realisiert werden. Dies hat weiter den Vorteil, dass insbesondere die Verbindungsstellen auch bei hoher Druckbeanspruchung dicht bleiben. Schliesslich ist diese Ausführung auch aus ästhetischer Sicht zu bevorzugen.

Es können natürlich auch flexible Verbindungen eingesetzt werden. Dies hat den Vorteil, dass sie einfacher ersetzbar sind und als Normteile im Handel erhältlich sind.

Bevorzugt ist das zweite Anschlusselement über eine dritte Fluid-Verbindung mit der Hohlnadel verbunden, wobei die dritte Fluid-Verbindung zur Variation eines Probenvolumens mit Vorteil auswechselbar ausgebildet ist. Dadurch kann die Waschflüssigkeit ohne in die Dosiervorrichtung zu gelangen direkt durch die Hohlnadel hindurch gepumpt werden. Die dritte Fluid-Verbindung kann zudem als sogenannter Load-Loop ausgebildet sein, in welchen das Probenmaterial aufgesogen wird. Dies hat den Vorteil, dass das Probenmaterial nicht in die Dosiervorrichtung gelangt. Die dritte Fluid-Verbindung respektive der Load-Loop sind auswechselbar ausgebildet, insbesondere wenn die Dosiervorrichtung auch auswechselbar ausgebildet ist. So kann das Volumen der dritten Fluid-Verbindung respektive des Load-Loops dem maximalen Volumen der Dosiervorrichtung angepasst werden. Je grösser die Dosiervorrichtung dimensioniert ist, d. h. je grösser das maximale Volumen der Dosiervorrichtung ist, desto grösser ist die dritte Fluid-Verbindung respektive der Load-Loop auszubilden, wobei mit dem maximalen Volumen der Dosiervorrichtung das maximal aufnehmbare Volumen zum Beispiel durch dessen Spritzenkörper zu verstehen ist.

Die dritte Fluid-Verbindung kann auch mit der Dosiervorrichtung und der Hohlnadel verbunden sein, womit aber die Waschflüssigkeit über die Dosiervorrichtung durch die Hohlnadel hindurch gepumpt werden müsste.

Der Load-Loop und die Hohlnadel sind vorzugsweise einstückig ausgebildet. Bei unterschiedlichen Probenvolumen ist unter Umständen auch der Durchmesser der Hohlnadel dem Probenvolumen anzupassen. Falls der Load-Loop einem neuen Probenvolumen angepasst werden soll, muss also möglicherweise sowieso die Hohlnadel entsprechend ersetzt werden. Dies ist insbesondere dann der Fall, wenn sich die Probenvolumen stark unterscheiden, wenn zum Beispiel von einem Mikroliterbereich zu einem Mililiterbereich gewechselt wird. Durch eine einstückige Ausbildung des Load-Loops zusammen mit der Hohlnadel wird so eine vereinfachte Anpassung erreicht.

Die Hohlnadel und der Load-Loop können auch getrennt vorliegen, womit eine flexiblere Anpassung an die gegebenen Umstände ermöglicht wird.

Die Probe ist bevorzugt flüssig. Feste Proben werden bevorzugt in einem geeigneten Lösemittel gelöst und wiederum als flüssige Proben eingesetzt.

Alternativ kann die Probe auch gasförmig sein, womit aber den Dichtungen und den Übergängen der Fluid-Verbindungen besondere Beachtung bezüglich Dichtigkeit geschenkt werden muss.

Bevorzugt umfasst das Messgerät einen Chromatografen, insbesondere einen Flüssigchromatografen.

Die Vorrichtung kann auch für andere, dem entsprechenden Fachmann hinreichend bekannte Messmethoden eingesetzt werden, bei welchen ein bestimmtes Fluid-Volumen vorgängig abgemessen werden muss. Insbesondere kann mit der Vorrichtung auch eine Probenvorbereitung vorgenommen werden. Zum Beispiel in der Mikrobilologie, in der Genetik oder ähnlichen Gebieten, wo kleinste Volumina mit hoher Genauigkeit abgemessen werden müssen, kann die Vorrichtung erfolgreich eingesetzt werden. So könnten zum Beispiel auch Zellen geimpft oder kleinste Mengen von insbesondere flüssigen Stoffen gemischt werden.

Vorzugsweise umfasst die Vorrichtung zur Reinigung der Hohlnadel ein Waschmodul mit einem Abfalltank und mindestens eine Tauchposition. Für einen Waschvorgang kann so die Hohlnadel über den Abfalltank geführt werden und bei offenem Ventil die erste und/oder die zweite Waschflüssigkeit mittels der entsprechenden Pumpe(n) durch die Hohlnadel hindurch in den Abfalltank gepumpt werden. Damit kann die Hohlnadel kontinuierlich gereinigt werden, ohne einer Verdünnungsreihe zu unterliegen, welche bei einem mehrmaligen Aufziehen und Ausstossen der Waschflüssigkeit durch die Dosiervorrichtung gemäss dem Stand der Technik erfolgen würde. Die Tauchposition ist als Gefäss mit einem Überlauf ausgebildet, wobei der Überlauf in den Abfalltank geleitet werden kann. Damit kann die gesamte Waschflüssigkeit in einem einzigen Tank gesammelt werden. Die Hohlnadel wird in die Tauchposition eingeführt, anschliessend wird eine Waschflüssigkeit durch die Hohlnadel hindurchgepumpt. Dabei besteht die Möglichkeit, dass das Gefäss mit der Waschflüssigkeit soweit aufgefüllt wird, dass die Hohlnadel in derselben Waschflüssigkeit eintaucht. Anderseits kann die Tauchposition auch schon im Voraus mit Waschflüssigkeit gefüllt sein. Damit wird erreicht, dass die Hohlnadel auch von aussen gewaschen werden kann. Dazu kann auch eine Beaufschlagung der Tauchposition mit Ultraschall vorgesehen sein, um den Reinigungsprozess effizienter zu gestalten. Dem Fachmann sind dazu auch weitere Möglichkeiten bekannt, mit welchen die Reinigung optimiert werden kann.

Es können auch Wegwerf-Hohlnadeln verwendet werden, womit sich eine Reinigung erübrigt. Die Vorrichtung kann so beschaffen sein, dass in einem Wegwerf-Betrieb die Hohlnadel nach der Verwendung entsorgt und in einem Wasch-Betrieb die Hohlnadel nach einer Verwendung, insbesondere nach jeder Verwendung, gereinigt werden. Dies ist insbesondere dann von Interesse, wenn besonders hohe Anforderungen an die Reinheit der Hohlnadel gestellt werden, zum Beispiel wenn sogenannte Cross-Kontamination verhindert werden soll.

Vorzugsweise umfasst die Vorrichtung ein Injektionsventil mit einem Injektionsport, wobei die Probe mit der im Injektionsport positionierten Hohlnadel via das Injektionsventil in den Probenaufnahmeeingang des Messgeräts abgebbar ist. Dies ist insbesondere dann von Vorteil, wenn das Messgerät einen Flüssigchromatographen oder einen Hochdruckflüssigchromatographen umfasst.

Weiter kann das Probenmaterial auch in ein Gefäss abgegeben werden oder einer anderweitigen Weiterverarbeitung zur Verfügung gestellt werden.

Vorzugsweise umfasst die Vorrichtung eine Probenhalterung zur Bereithaltung von Proben. Die Probenhalterung umfasst dazu mehrere Positionen zum Plazieren von Probenbehältern. Die Probenhalterung weist dazu typischerweise eine rechteckige Grundfläche auf, wobei die Positionen in parallelen Reihen angeordnet sind. Auch eine versetzte Anordnung der Reihen ist denkbar. Dies hat den Vorteil, dass die Probenbehälter platzsparender angeordnet werden können.

Alternativ kann auf die Probenhalterung auch verzichtet werden.

Die Lösung der Aufgabe bezüglich dem Reinigungsverfahren ist durch die Merkmale des Anspruchs 17 definiert. Bei dem Verfahren zur Reinigung einer Vorrichtung zur Aufnahme einer Probe und zur Abgabe der Probe in einen Probenaufnahmeeingang eines Messgeräts mit einer Hohlnadel, einer ersten Zuleitung für eine erste Waschflüssigkeit, einer zweiten Zuleitung für eine zweite Waschflüssigkeit sowie einer Dosiervorrichtung wird mit der ersten Waschpumpe die erste Waschflüssigkeit und/oder mit der zweiten Waschpumpe die zweite Waschflüssigkeit an der Dosiervorrichtung vorbei durch die Hohlnadel hindurch gepumpt.

Aus der nachfolgenden Detailbeschreibung und der Gesamtheit der Patentansprüche ergeben sich weitere vorteilhafte Ausführungsformen und Merkmalskombinationen der Erfindung.

### Darstellung der Erfindung

### Kurze Beschreibung der Zeichnungen

Die zur Erläuterung des Ausführungsbeispiels verwendeten Zeichnungen zeigen:
- Fig. 1: eine schematische Darstellung eines ersten Ausführungsbeispiels einer erfindungsgemässen Vorrichtung;
- Fig. 2: eine schematische Schrägansicht des verfahrbaren Teils der erfindungsgemässen Vorrichtung;
- Fig.3: einen Schnitt durch den verfahrbaren Teil der erfindungsgemässen Vorrichtung;
- Fig. 4: eine schematische Darstellung eines zweiten Ausführungsbeispiels einer erfindungsgemässen Vorrichtung und
- Fig. 5: eine schematische Darstellung eines dritten Ausführungsbeispiels einer erfindungsgemässen Vorrichtung.

Grundsätzlich sind in den Figuren gleiche Teile mit gleichen Bezugszeichen versehen.

### Wege zur Ausführung der Erfindung

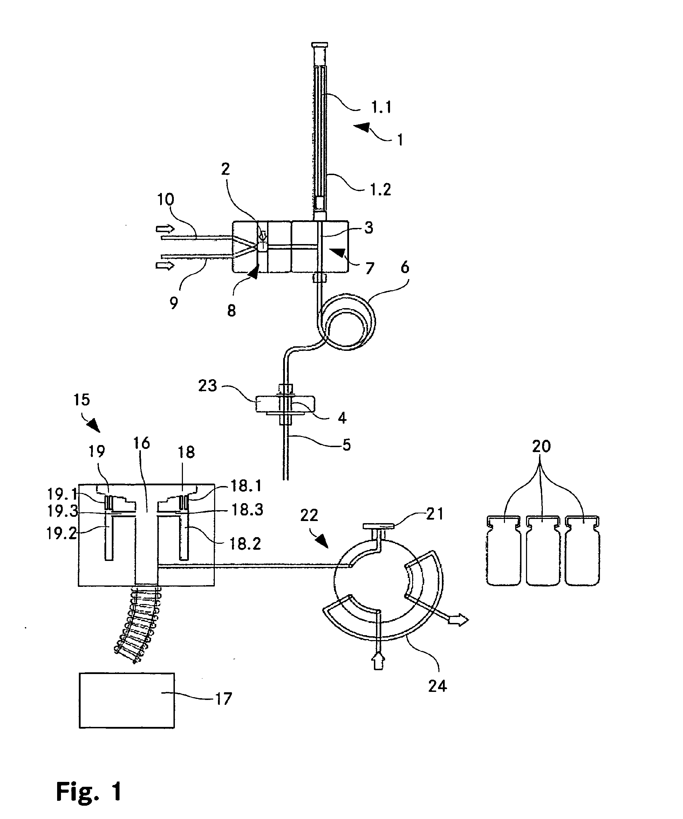

Figur 1 zeigt eine schematische Darstellung eines ersten Ausführungsbeispiels einer erfindungsgemässen Vorrichtung.

Das Magnetventil 2 mit einem Eingang und einem Ausgang, die T-Stücke 7 und 8 und die Dosiervorrichtung bilden dabei eine Einheit. Diese ist in der vorliegenden Ausführungsform aus einem Werkstück, zum Beispiel aus Kunststoff oder Metall, gebildet. Die T-Stücke 7, 8 sind als Bohrungen im Werkstück realisiert. Das erste T-Stück ist über zwei Fluidanschlüsse mit Fluidleitungen 9, 10 mit jeweils einer Pumpe verbunden, welche Waschflüssigkeiten, zum Beispiel organische und anorganische Waschflüssigkeiten aus entsprechenden Behältern fördern können (nicht dargestellt).

Ein dritter Fluidanschluss des ersten T-Stückes 8 ist mit dem Eingang des Magnetventils 2 verbunden. In der Figur 1 ist ersichtlich, dass das Magnetventil gewissermassen selbst der dritte Fluidanschluss des ersten T-Stückes ist.

Der Ausgang des Magnetventils 2 ist mit dem zweiten T-Stück 7 verbunden. Weiter ist das zweite T-Stück 7 über eine Dilutorleitung, welche auch als Bohrung im Werkstück ausgebildet ist, mit der Dosiervorrichtung 1 verbunden. Die Dosiervorrichtung 1 umfasst einen Spritzenkörper 1.2 und einen Stössel 1.1, welcher im Spritzenkörper 1.2 in Längsrichtung verschiebbar angeordnet ist. In der vorliegenden Ausführungsform wird bei der Dosiervorrichtung 1 zum Aufziehen und Ausstossen jeweils der Stössel 1.1 bewegt, wobei dies aber auch durch eine Verschiebung des Spritzenkörpers 1.2 bei fix montiertem Stössel 1.1 möglich ist.

Ein dritter Fluidanschluss des zweiten T-Stückes 7 ist über einen Load-Loop 6 und den Nadeladapter 4 mit der Hohlnadel 5 verbunden. Damit kann mittels der Dosiervorrichtung ein Probenvolumen über die Hohlnadel 5 in den Load-Loop 6 aufgesogen werden. Der Load-Loop 6 ist bezüglich seines Volumens so dimensioniert, dass das Probenvolumen nicht in die Dosiervorrichtung 1 gelangen kann. Dazu sind die Dosiervorrichtung 1 und der Load-Loop 6 gewissermassen aufeinander abgestimmt.

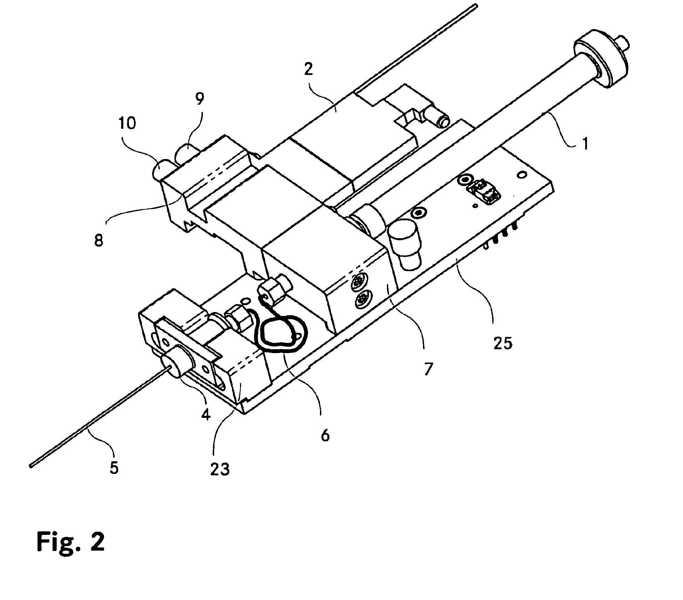

Die Hohlnadel 5 ist über den Nadeladapter 4 mit einer Nadeladapterhalterung 23 verbunden. Die beiden T-Stücke 7, 8, das Magnetventil 2, die Dosiervorrichtung 1, der Load-Loop 6, der Nadeladapter 4, die Hohlnadel 5 und die Nadeladapterhalterung 23 sind relativ zueinander fix auf einer Halterung 25 angeordnet (in der Figur 2 ersichtlich), welche mittels drei zueinander orthogonal orientierten Linearführungen verschiebbar ist (nicht dargestellt). Um dies zu ermöglichen, sind die Fluid-Verbindungen 9, 10 flexibel ausgebildet, zum Beispiel aus Kunststoffschläuchen. Dadurch können Waschflüssigkeitsbehälter örtlich fix angeordnet werden.

Die Figur 1 zeigt weiter eine Probenhalterung 20 zum Bereithalten von zu untersuchendem Probenmaterial. Vor dem Aufziehen von Probenmaterial wird Luft angesogen. Mittels der Halterung 25 (in der Figur 2 ersichtlich) kann die Hohlnadel 5 zur Probenhalterung 20 geführt werden, um, bei geschlossenem Magnetventil 2, Probenmaterial mittels der Dosiervorrichtung 1 über die Hohlnadel 5 in den Load-Loop 6 aufzuziehen. Danach wird mittels der Dosiervorrichtung 1 Luft in die Hohlnadel 5 aufgesogen. Damit ist das Probenmaterial zwischen zwei Luftblasen eingeschlossen, womit verhindert wird, dass das Probenmaterial mit Waschflüssigkeit kontaminieren kann. Je nach Anwendung kann aber auf die Luftblasen auch verzichtet werden. So zum Beispiel, wenn das Probenmaterial Luftempfindlich ist oder wenn zum Beispiel aufgrund der Viskosität oder anderer Eigenschaften des Probenmaterials eine Durchmischung mit der Waschflüssigkeit nicht soweit stattfinden kann, dass die Messergebnisse beeinflusst würden. Typischerweise wird mehr Probenmaterial aufgesogen als schliesslich für die Analyse im Messgerät verwendet wird. Es besteht aber zum Beispiel bei einem HPLC (Hochdruckflüssigchromatograph) auch die Möglichkeit, dass eine Waschflüssigkeit zugleich die mobile Phase darstellt, womit durch die Dosiervorrichtung 1 exakt das zu verwendende Volumen an Probenmaterial für die Analyse aufgesogen wird.

Die Figur 1 zeigt weiter ein Waschmodul 15 mit zwei Tauchpositionen 18, 19 und einem Abflusskanal 16, welcher in einen Abfalltank 17 führt. Die beiden Tauchpositionen 18, 19 sind als oben offene Gefässe ausgebildet, welche einen Überlauf in den Abflusskanal 16 aufweisen. Mittels der Halterung 25 (in der Figur 2 ersichtlich) kann die Hohlnadel 5 in den Abflusskanal 16 eingeführt werden. Mittels der Halterung 25 kann die Hohlnadel 5 in eine der Tauchpositionen 18, 19 geführt werden. Bei offenem Magnetventil 2 kann nun Waschflüssigkeit über eine oder beide Fluid-Verbindungen 9, 10 durch die beiden T-Stücke 7, 8 gepumpt werden, so dass die Waschflüssigkeit den Load-Loop 6 und die Hohlnadel 5 durchspült. Die Pumpen sind dabei so ausgebildet, dass sie Waschflüssigkeit kontinuierlich fördern können. Die Waschflüssigkeit strömt alsdann in die entsprechende Tauchposition 18, 19 und überfüllt diese, wobei die Waschflüssigkeit über den Überlauf durch den Abflusskanal 16 in den Abfalltank 17 gelangt. Mittels der Halterung 25 kann die Hohlnadel 5 auch in den Abflusskanal 16 eingeführt werden, um mittels der Pumpen Reste des Probenmaterials, welches sich in der Hohlnadel 5 oder im Load-Loop 6 befindet, direkt in den Abfalltank 17 auszustossen. Damit wird die Aussenseite der Hohlnadel 5 nicht unnötig mit Probenmaterial kontaminiert.

Sobald leistungsfähigere Waschpumpen eingesetzt werden, welche einen weiteren Zeitgewinn bezüglich der Dauer des Waschzyklus bringen, stellt sich bei einfachen Wasch-Kavitäten (Tauchpositionen 18, 19) in Form von Bohrungen das Problem des Zurückspritzens der Waschflüssigkeit. Dazu wird eine Waschstation derart ausgebildet, dass zwei stabförmige Einsätze (Tauchpositionen 18, 19) mit unterschiedlichen Bohrungsdurchmessern 18.1, 18.2 respektive 19.1, 19.2 angeordnet werden. Diese weisen jeweils oben eine enge Einlassbohrung 18.1, 19.1 auf, durch welche die Nadel gerade noch hindurch kommt und weisen im unteren Teil eine etwas grössere Bohrung 18.2, 19.2 auf. Seitliche Auslassbohrungen 18.3, 19.3 auf Höhe des Übergangs der beiden Bohrungsquerschnitte 18.1, 18.2 respektive 19.1, 19.2 dienen sodann dazu, dass der Waschstrom an dieser Stelle seitlich ausströmen und in den Abflusskanal abfliessen kann. Je nach Leistung der Waschpumpe kann aber auf die unterschiedlichen Bohrungsquerschnitte auch verzichtet werden, womit die Tauchpositionen 18, 19 eine Form eines geraden Prismas, insbesondere eine Rohrform aufweisen können.

Die Figur 1 zeigt weiter ein Injektionsventil 22, welches einen Injektionsport 21 und einen Loop 24 umfasst. Der Injektionsport 21 des Injektionsventils 22 umfasst ein Ventil und kann damit zwischen Loop 24 und Abfalltank umgeschaltet werden. In einer ersten Stellung wird in den Injektionsport 21 eingespiesene Flüssigkeit direkt in den Abfalltank 17 geleitet. In einer zweiten Stellung wird in den Injektionsport 21 eingespiesene Flüssigkeit in den Loop 24 geleitet.

Mittels der Halterung 25 (in der Figur 2 ersichtlich) kann die Hohlnadel 5, welche zusammen mit dem Load-Loop 6 das Probenmaterial, eingeschlossen durch zwei Luftblasen, umfasst und aussen gewaschen ist, in den Injektionsport 21 des Injektionsventils 22 eingeführt werden. Nun wird bei immer noch geschlossenem Magnetventil 2 und in erster Stellung des Injektionsports mittels der Dosiervorrichtung 1 ein erstes Volumen direkt in den Abfalltank ausgestossen. Das erste Volumen umfasst die zuletzt aufgenommene Luftblase und einen Teil des aufgenommenen Probenmaterials. Danach wird der Injektionsport 21 in die zweite Stellung umgeschaltet und so mit dem Loop 24 verbunden. Nun wird mittels der Dosiervorrichtung exakt das für die Analyse benötigte Volumen an Probenmaterial in den Loop 24 gepumt, wobei noch immer ein Rest an Probenmaterial in der Hohlnadel 5 und möglicherweise auch im Load-Loop 6 verbleibt. Der Injektionsport 21 wird wieder in die erste Stellung umgeschaltet. Nun werden der Rest des Probenmaterials und die zweite Luftblase mittels der Dosiervorrichtung 1 durch die Hohlnadel 5 hindurch in Richtung des Abfalltanks 17 ausgestossen. Um das restliche Probenmaterial vollständig aus dem Injektionsventil 22 auszustossen wird nun das Magnetventil 2 geöffnet und mittels der Pumpen erste und/oder zweite Waschflüssigkeit durch die Hohlnadel 5 hindurch in den Injektionsport gepumpt, wobei der Injektionsport 21 in der ersten Stellung die Waschflüssigkeit in den Abfalltank 17 leitet. Während dessen kann mittels einer weiteren Pumpe (nicht dargestellt) das Probenmaterial aus dem Loop 24 zum Messgerät gepumpt werden.

Dadurch, dass nur ein mittlerer Teil des durch die Hohlnadel 5 und den Load-Loop 6 augesogenen Probenmaterials für die Analyse verwendet wird, kann sichergestellt werden, dass kein mit Waschflüssigkeit kontaminiertes Probenmaterial in das Messgerät gelangt, womit die Messresultate reproduzierbarer und genauer werden.

Mittels der Halterung 25 (in der Figur 2 ersichtlich) kann die Hohlnadel 5 vom Injektionsport 21 in die zweite Tauchposition 19 geführt und mit der zweiten Waschflüssigkeit durchspült werden, um die Nadel innen und aussen zu waschen.

Anschliessend wir die Hohlnadel 5 wiederum mittels der Halterung 25 in den Injektionsport 21 geführt, wobei diese mit der ersten Waschflüssigkeit durchspült wird. Der Injektionsport 21 befindet sich dabei in der ersten Stellung, so dass die Waschflüssigkeit in den Abfalltank 17 gelangt. Schliesslich wird die Hohlnadel 5 mittels der Halterung 25 in die erste Tauchposition 18 geführt und mit der ersten Waschflüssigkeit durchspült und aussen gewaschen. Die Waschflüssigkeit gelangt dabei über den Überlauf durch den Abflusskanal 16 in den Abfalltank 17. Nun wird das Magnetventil 2 geschlossen und die Hohlnadel 5 wird mittels der Halterung 25 in eine Ruheposition überführt, bis der nächste Zyklus startet.

Die Figur 2 zeigt eine detailliertere schematische Schrägansicht des verfahrbaren Teils der erfindungsgemässen Vorrichtung, welche die beiden Fluid-Verbindungen 9, 10, das Magnetventil 2, die beiden T-Stücke 8, 9 (nicht explizit ersichtlich), die Dosiervorrichtung 1, den Load-Loop 6, die Hohlnadel 5, den Nadeladapter 4 und die Nadeladapterhalterung 23 zeigt. Der Nadeladapter 4 und/oder die Nadeladapterhalterung 23 sind federnd ausgeführt. Damit wird erreicht, dass die Hohlnadel 5 im Injektionsport 21 unter dem Federdruck dicht verschlossen werden kann, so dass durch die Nadel 5 ausgestossene Flüssigkeit (Probenmaterial oder Waschflüssigkeit) nicht zwischen der Hohlnadel 5 und dem Injektionsport 21 austreten kann. Weiter zeigt die Figur 2 einer Halterung 25, mit welchem sämtliche oben genannten Teile entweder direkt oder indirekt verbunden sind. Dazu ist die Halterung 25 im Wesentlichen als rechteckige Platte mit rückseitiger Haltevorrichtung für eine oder mehrere Linearführungen ausgebildet, womit die Halterung verfahrbar ist. Je nach Anwendung kann die Halterung mittels einer Linearführung typischerweise in Nadellängsrichtung oder mittels einer zusätzlichen Linearführung in einer Ebene oder mittels gesamthaft dreier Linearführungen räumlich verfahren werden. Der Load-Loop 6, die Nadel 5 und die Dosiervorrichtung 1 sind auswechselbar ausgebildet.

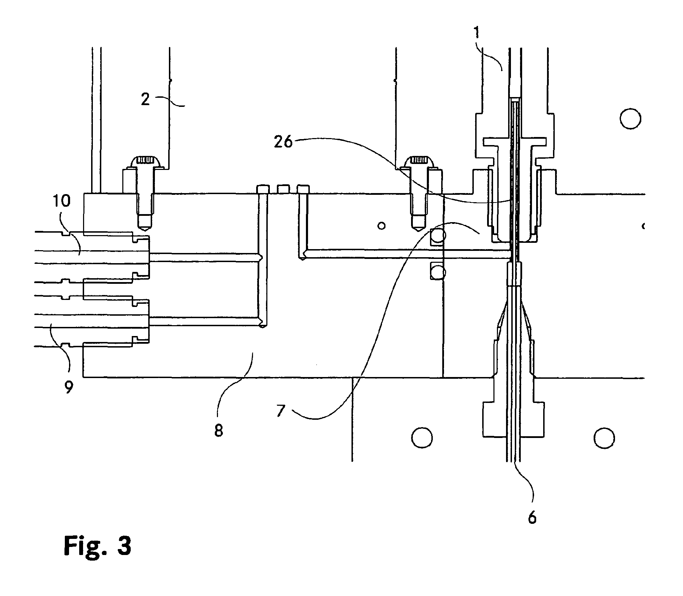

Die Figur 3 zeigt einen Schnitt durch den verfahrbaren Teil der erfindungsgemässen Vorrichtung im Wesentlichen gemäss der Figur 2.

Die T-Stücke 7 und 8 sind in der vorliegenden Ausführungsform jeweils aus einem Werkstück gebildet. Das T-Stück 8 weist dazu drei in Kommunikation stehende Bohrungen auf, wobei zwei der Bohrungen mit Fluid-Verbindungen 9, 10 verbunden sind und eine dritte Bohrung mit dem Eingang des Magnetventils 2 verbunden ist. Dasselbe Werkstück weist noch zwei weitere, miteinander in Kommunikation stehende Bohrungen auf, wobei eine erste Bohrung mit dem Ausgang des Magnetventils 2 verbunden ist und die zweite Bohrung mit dem zweiten T-Stücke 7 in Kommunikation steht. Das zweite T-Stücke 7 ist auch aus einem Werkstück gebildet und weist drei untereinander in Kommunikation stehende Bohrungen auf, wobei eine erste Bohrung in Kommunikation mit dem ersten T-Stück 8 steht, eine zweite Bohrung ein Anschlusselement für die Dosiervorrichtung 1 bildet und eine dritte Bohrung ein Anschlusselement für den Load-Loop 6 bildet, welcher in der Figur 3 nur als Ansatz ersichtlich ist. Die beiden Werkstücke werden so verschraubt, dass die Verbindung zwischen den beiden T-Stücken 7, 8 dicht ist. Die Ausbildung der beiden T-Stücke 7, 8 aus einzelnen Werkstücken ist vorteilhaft, da damit sämtliche Fluid-Verbindungen durch gerade Bohrungen erreichbar sind.

Damit sich einerseits keine Gasblasen, welche durch Entgasen in der Mischzone zweier Flüssigkeiten entstehen können, in der Sackgassenzone 3 des Anschlusselements 7 (Fig.
1) festsetzen können und damit die Waschspülung jegliches Hohlvolumen in dem Anschlusselement 7 erreicht bzw. durchströmt, wird ein Kanüleneinsatz 26, welcher einen Haltezylinder am unteren Ende trägt, in das T-Stück des Anschlusselements 7 eingesetzt. Die Waschflüssigkeit wird damit zunächst vom T-Stück aus an der Aussenseite des Kanüleneinsatzes 26 bis unter den Stempel des Dilutors geführt und von dort durchs Innere des Kanüleneinsatzes 26 hinab zum Fluid-Anschluss des Load-Loops 6 geleitet. Diese koaxiale Bauweise erlaubt, dass zwei gegenläufige Stömungsrichtungen in einem engen Bohrungsquerschnitt durch eine Sackgasse geleitet werden können.

Natürlich können statt der mit Bohrungen versehenen Werkstücke auch Leitungen aus Kunststoff oder Metall verwendet werden.

In der vorliegenden Ausführungsform betragen die Durchmesser der Bohrungen (Leitungen) der beiden T-Stücke 7, 8 jeweils 1 mm. Eine Bohrung weist eine Länge zwischen 5 mm und 30 mm auf. Die Verbindungsleitung zwischen dem zweiten T-Stück 7 und der Dosiervorrichtung beträgt 0.41 mm und der Innendurchmesser des Load-Loops 6 beträgt 0.5 mm. Die Länge des Load-Loops 6 ist variabel, das Heisst, der Load-Loop 6 ist auswechselbar und an die gegebenen Umstände anpassbar. Dasselbe gilt für die Dosiervorrichtung 1. Diese hat in der vorliegenden Ausführungsform einen Durchmesser von 1 mm oder 0.72 mm und eine Länge (maximales Hubvolumen) von 19.5 mm. Gesamthaft sind die Dimensionen lediglich als Beispiel zu verstehen. Eine Vergrösserung oder Verkleinerung der einzelnen Fluid-Verbindungen muss untereinander nicht proportional erfolgen. Insbesondere kann für einen LC (Liquidchromatograph oder Flüssigchromatograph) die gesamte Vorrichtung wesentlich grösser dimensioniert sein. Die Leitungen/Bohrungen können dabei Durchmesser von mehreren Millimetern und die Dosiervorrichtung 1 kann ein Hubvolumen von mehreren Millilitern aufweisen.

Die Längen der Bohrungen sind jedoch gesamthaft so kurz wie möglich zu halten, um ein kleines Gesamtvolumen zu erreichen. Dies ist wichtig, um schnell zwischen den beiden Waschflüssigkeiten wechseln zu können. Beim Wechseln der Waschflüssigkeiten muss nämlich zuerst das sogenannte Totvolumen (gesamtes Volumen der Leitungen ab dem ersten T-Stück 8) mit der neuen Waschflüssigkeit von der "alten" Waschflüssigkeit befreit werden.

Fig. 4 zeigt eine schematische Darstellung eines zweiten Ausführungsbeispiels einer erfindungsgemässen Vorrichtung.

Die Vorrichtung basiert auf einer X.Y.Z. Einheit wobei es für die Materialwahl und Spülvolumen relevant ist, welche Komponenten mit dem X.Y.Z. Arm bewegt werden und welche Komponenten fix positioniert sind. Die Waschleitungen 9 und 10 sind flexibel und verbinden die fixen Komponenten (Bezugszeichen 11-22) mit den bewegten Komponenten (Bezugszeichen 1-8). Die bewegten Komponenten 1-8 befinden sich auf der Z-Achse. Somit kann mit der Hohlnadel 5 das Waschmodul 15, die Probenhalterung 20 und der Injektionsport 21 auf dem Injektionsventil 22 angefahren werden. Am Eingang und Ausgang des Ventils 2 befindet sich je ein T-Stück 7 und 8, welches am Eingang die Waschleitungen 9 und 10 verbindet und am Ausgang die Dilutorleitung 3 mit dem Load-Loop 6 verbindet.

Das Ventil 2 koppelt den Dilutor 1 (Dosiervorrichtung 1) von den Waschleitungen 9 und 10 und damit von den Waschpumpen 11 und 12 ab. Das Ansaugen und Dosieren der Proben erfolgt ausschliesslich über die Hohlnadel 5 mit dem Dilutor 1. Das Volumen vom Load-Loop 6 ist so gross, dass die Probe auch bei maximalem Hub des Dilutors 1 nicht bis zum T-Stück 7 am Ausgang des Ventils 2 gelangen kann. Das Reinigen erfolgt typischerweise mit zwei unterschiedlichen Lösungsmitteln 13 und 14 (wässrig/organisch) mittels den Waschpumpen 11 und 12, welche über die Waschleitungen 9 und 10 durch das Ventil 2, durch den Load-Loop 6, durch den Nadeladapter 4 und durch die Hohlnadel 5 gedrückt werden.

Durch diese Anordnung der einzelnen Komponenten kann der mit Probe kontaminierte Bereich ohne Dilutor 1, insbesondere ohne den Dilutor 1 zu kontaminieren, schnell und mit unterschiedlichen Lösungsmitteln (Reinigungsmitteln, Waschflüssigkeiten) 13 und 14 gespült, insbesondere kontinuierlich durchspült werden. Wird die Nadel in die Tauchpositionen 18 und 19 des Waschmoduls 15 gefahren, kann auch der mit Probe kontaminierte Aussenbereich der Hohlnadel 5 gereinigt werden. Steht die Hohlnadel im Injektionsport 21 des Injektionsventiles 22, so kann einerseits mit dem Dilutor 1 eine Probe dosiert werden und andererseits mittels der Waschpumpen 11 und 12 der Injektionsport 21 und das Injektionsventil 22 mit dem Waschlösungsmitteln 13 und 14 gespült und gereinigt werden. Über den Abflusskanal 16 fliessen die Waschlösungsmittel in den Abfalltank 17.

Die Positionen mit den Bezugszeichen 1-8 sind direkt auf der Z-Achse montiert. Das Volumen der Waschleitungen 9 und 10 sowie der Waschpumpen 11 und 12 ist durch das Ventil 2 vom Volumen des Dilutors 1, der Dilutorleitung 3, dem Load-Loop 6 und der Hohlnadel 5 abgekoppelt. Der Load-Loop 6 kann nun aus einem starren Material wie beispielsweise aus einem festen Kunststoff- oder Metall und beispielsweise als Schlauch, oder wie obig beschrieben aus einem oder mehreren entsprechende Bohrungen aufweisenden Werkstücken ausgebildet sein. Dadurch wird die Dosiergenauigkeit und Wiederholbarkeit verbessert, da beide weder durch ein grosses Totvolumen noch durch flexible und weiche Leitungen negativ beeinflusst werden.

Bei bekannten Probenaufgabevorrichtungen ist eine der wesentlichsten Ursachen für die Probenverschleppung die Tatsache, dass Probe in die Spritze gesaugt wird und dass das Probenvolumen, welches sich in der Nadel befindet, beim Waschen ebenfalls in die Spritze gesaugt wird. Mittels mehreren Kolbenhüben wird dann die Probe ausgewaschen, was jedoch lediglich eine Verdünnungsreihe ergibt. Die Spindel, welche den Spritzenkolben bewegt, kann eine kleine Steigung haben, was ein Vorteil in der Auflösung des Spritzenkolbenweges bringt. Allerdings ist die Waschlösungsmittelmenge, mit der die Spritze gereinigt wird, von den Spritzenkolbenhüben abhängig. D. h. je mehr Waschlösungsmittel zur Reinigung verwendet werden soll, umso mehr Hübe müssen mit dem Spritzenkolben ausgeführt werden. Eine entsprechend hohe Anzahl Hübe erhöht allerdings den Spritzenverschleiss.

Die erfindungsgemässe Vorrichtung ist so aufgebaut, dass auch bestehende Geräte mit vernünftigem Aufwand umgerüstet werden können. Der Aufbau und die Konstruktion verhindern, dass Probe in den Dilutor 1 gelangt und dass mit genügender, im Prinzip sogar beliebiger Menge wässeriger und/oder organischer Waschlösung der durch die Probe kontaminierte Bereich in der Nadel 5 (Hohlnadel 5), im Load-Tube (Load-Loop 6) und im Injektionsventil 22 schnell und einfach gewaschen werden kann und dass die Nadel 5 im Injektionsport 21 optimal positioniert wird.

Gegenüber dem Stand der Technik:
- ist der Dilutor 1 von der Nadel 5 abgekoppelt,
- ist die Nadel 5 mit einem Load-Tube 6 verbunden und verfügt über eine eigene Halterung,
- erfolgt das Waschen des kontaminierten Bereichs über ein T-Stück 7 zwischen Dilutor 1 und Load-Tube 6 und
- umfasst der Kontaminationsbereich nur noch das Injektionsventil 22, den Injektionsport 21, die Nadel 5 sowie neu den Load-Tube 6, jedoch nicht mehr den Dilutor 1.

Indem der Dilutor 1 von der Nadel 5 abgekoppelt und beispielsweise um 180° gedreht ist, verbleiben allfällige Luftblasen nicht in der Spritze.

Die Nadel 5 wird mit einem Union mit dem Load Tube 6 verbunden und im Needle-Adapter (Nadeladapter 4) fixiert.

Der Needle-Adapter 4 federt die Nadel 5 minimal, sodass die Nadel 5 im Injektionsport 21 auf Anschlag positioniert werden kann.

Der Load-Tube 6 verhindert auf Grund seines Volumens, dass Probe in den Dilutor 1 gelangt. Das Volumen des Load-Tube 6 (Nadel 5 bis Wash outlet T-Union 7) entspricht ca. 1.5 mal dem Dilutorvolumen.

Das Ventil 2 (hier ein Rückschlagventil 2) koppelt die Waschleitungen 9 und 10 vom Dilutor 1, vom Load-Tube 6 und von der Nadel 5 ab. Die Dosiergenauigkeit des Dilutors 1 wird nicht durch das Volumen und möglichen Luftblasen in den Waschleitungen 9 und 10 beeinträchtigt.

Das erste Anschlusselement Wash Inlet T-Union 8, welches direkt auf dem Rückschlagventil 2 positioniert ist, ermöglicht das schnelle Wechseln der beiden Wash Eluenten.

Beim Waschen wird die Probe nicht durch den Kolbenhub des Dilutors 1 hin und her geschoben, sondern mittels der Waschpumpen 11 und 12 via Rückschlagventil 2 und Wash outlet T-Union 7 ausgestossen.

Das Wash und Waste Modul (Waschmodul 15) kann auf der Höhe und nahe dem Injektorport 21 positioniert werden. Auf Grund der Waschpumpen 11, 12 wird kein statischer Druck für das Waschen benötigt. Es ist möglich Standard 1 oder 2 Liter Wash Eluent Flaschen einzusetzen.

Typischerweise hat die Nadel Gauge 22/22s oder andere handelsübliche Dimensionen.

Ein Injektionszyklus umfasst normalerweise ein Prewash-Macro, ein Injektions-Macro und ein Clean-Macro. Weiter wird noch ein Init-Macro benötigt um den Dilutor, alle Leitungen und Washports zu füllen.

Mit dem Init-Macro wird der Dilutor 1 benetzt und gefüllt. Die Nadel 5 ist dazu in Waste-Position 16. Während Waschpumpe 12 aktiv ist, wird mit dem Dilutor 1 angesaugt, wobei die Kolbenhubgeschwindigkeit kleiner sein muss als die Förderleistung der Waschpumpe. Danach wird der Dilutor 1 ausgestossen und das gleiche mit Waschpumpe 11 wiederholt.

Der Dilutor 1 ist dann mit Wasser gefüllt. Anschliessend wird Wash 19 mit Wash Eluent 14 (organisch) und danach Wash 18 mit Wash Eluent 13 (wässrig) überfüllt.

Beim Prewash-Macro wird die Nadel, während das Injektionsventil 22 in Injektposition verbleibt, im Injektionsport 21 positioniert. Danach wird kurz Waschpumpe 11 aktiviert (ca. 5 Sek.). Danach wird die Nadel 5 aus dem Injektionsport 21 gezogen und der Dilutor saugt 1 µl Luft an.

Damit die Probenlösung möglichst unverfälscht ins Analysesystem gelangt, wird das effektive Probenvolumen durch ein wählbares Vorlaufsegment ("Front-Volumen") sowie ein wählbares Nachlaufsegment ("Rear-Volumen") vor und nach dem Aufziehen des Probenvolumens in die Hohlnadel 5 eingeschlossen. Das Front-Volumen verhindert, dass verdünnte Probe vom einzuspritzenden Probenvolumen abgetrennt wird. Das Rear-Volumen stellt sicher, dass keine Luft bzw. Systemflüssigkeit am Ende des einzuspritzenden Probenvolumens ins Analysensystem gerät. Beim Injektions-Macro fährt die Nadel 5 in die Probenflasche 20 und saugt Probe an. Das Volumen ergibt sich aus dem gesetzten Front-Volumen plus Injektions-Volumen plus Rear-Volumen (z. B. 5 µl + 10 µl + 10 µl; µl = Mikroliter). Je nach vorhandener Probenmenge, Load-Loopgrösse und Injektionsmenge sind die Volumina veränderbar. Auch könnte bei geringen vorhandenen Probenmengen das Front und das Rear-Volumen, abgekoppelt durch kleine Luftblasen, aus Wash 18 genommen werden. Nachdem die Probe angesaugt wurde, kann Luft angesaugt werden. Das angesaugte Luftvolumen kann grundsätzlich durch den Anwender bestimmt werden und beträgt zum Beispiel 3 µl. Die Nadel fährt nun kurz ganz in die Wash 18 Position, um die Nadel 5 aussen zu waschen. Danach positioniert sich die Nadel 5 im Injektionsport 21. Bevor das Injektionsventil 22 auf Load dreht, wird das Frontvolumen (z. B. 5 µl) ausgestossen, danach wird das Injektionsvolumen in den Loop 24 gedrückt und das Injektionsventil 21 auf Injektposition gedreht (Startsignal out). Danach wird der Dilutor 1 ganz ausgestossen.

Beim Clean-Macro verbleibt die Nadel 5 im Injektionsport 21 und Waschpumpe 12 (organisch) wird aktiviert (ca. 2-5 mal Dilutorvolumen). Danach fährt die Nadel 5 in die Wash 19 Position und Waschpumpe 12 (organisch) wird erneut aktiviert (ca. 100 µl). Danach fährt die Nadel 5 in die Waste-Position 16 und Waschpumpe 11 wird aktiviert.

Nach ca. 2 mal Dilutorvolumen fährt die Nadel 5 in die Wash 18 Position. Sobald die Nadel 5 in der Wash-Position 18 ist, wird die Waschpumpe 11 erneut eingeschaltet und es werden weitere ca. 2 Dilutorvolumen gepumpt (Ende des Injektionszyklus).

Während die Waschpumpen 11, 12 aktiv sind, könnte der Dilutorkolben etwas zurückgezogen werden, wobei die Ansauggeschwindigkeit kleiner als die Waschpumpen Förderleistung sein muss. Das Ausstossen könnte dann schnell erfolgen. Mit dieser Kolbenbewegung wird der Eluent im Dilutor erneuert. Auch könnte während der Injektorport-Reinigungsphase die Nadel 5 um ca. 1 mm zurückgezogen werden, um eine bessere Port-Reinigung zu erzielen.

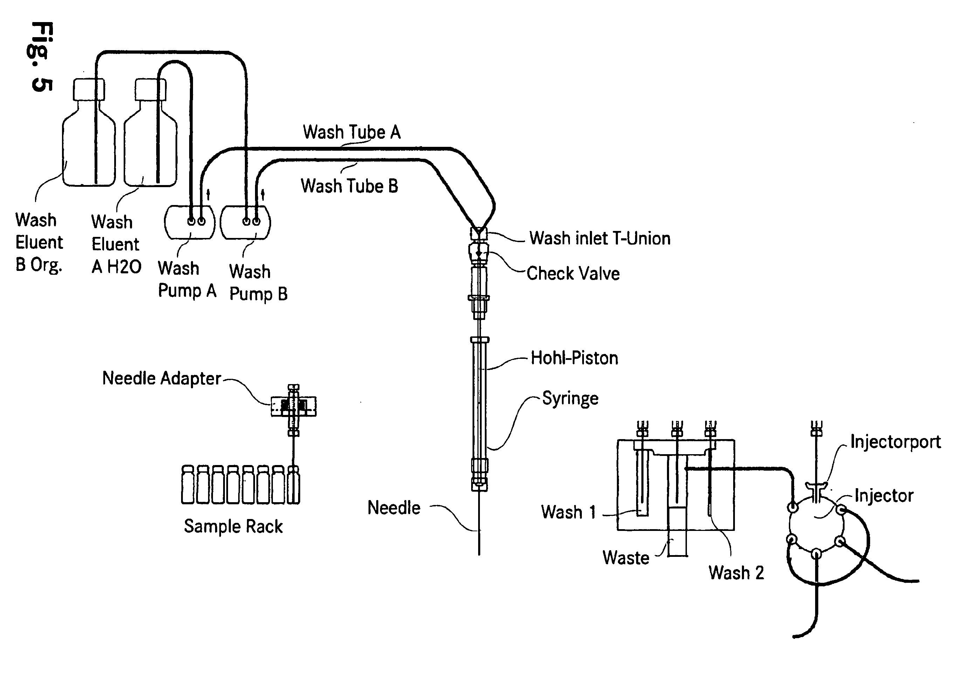

Fig. 5 zeigt ein drittes Ausführungsbeispiel einer erfindungsgemässen Vorrichtung, bei welchem die Spritze (Dilutor) und die Hohlnadel nicht getrennt sind und lediglich am Eingang, nicht jedoch am Ausgang des Rückschlagventils (Check-Valve) ein Anschlusselement (T-Stück) vorgesehen ist. An Stelle der Standard-Spritze wird eine Spritze (Syringe) mit einem Hohlstempel (Hohl-Piston) verwendet. Das Wash-Inlet T-Union und Check-Valve befindet sich dann am Eingang des Hohlstempels. Die Reinigung erfolgt dann auch von hinten, d. h. von dem Behälter bzw. den Behältern mit Waschflüssigkeit via Wash Inlet T-Union, Check-Valve, Spritze mit Hohlstempel durch die Hohlnadel hindurch.

Zusammenfassend ist festzustellen, dass durch die Erfindung eine Vorrichtung zur Aufnahme einer Probe und zur Abgabe der Probe in einen Probenaufnahmeeingang eines Messgeräts geschaffen wird, welche bezüglich Reproduzierbarkeit, Verschleppung besonders robust ist. Weiter zeichnet sich die erfindungsgemässe Vorrichtung durch einen besonders einfachen und kompakten Aufbau aus.

## Patentansprüche

1. Vorrichtung zur Aufnahme einer Probe und zur Abgabe der Probe in einen Probenaufnahmeeingang eines Messgeräts,
a) umfassend ein erstes Anschlusselement (8) mit drei Fluid-Anschlüssen und ein zweites Anschlusselement (7) sowie eine Hohlnadel (5) zur Aufnahme und Abgabe der Probe,
b) wobei eine erste Zuleitung (9) für eine erste Waschflüssigkeit über eine erste Pumpe mit einem ersten Fluid-Anschluss des ersten Anschlusselements (8) und eine zweite Zuleitung (10) für eine zweite Waschflüssigkeit über eine zweite Pumpe mit einem zweiten Fluid-Anschluss des ersten Anschlusselements (8) verbunden ist,
**dadurch gekennzeichnet, dass**
c) ein Fluid-Anschluss des zweiten Anschlusselements (7) mit dem dritten Fluid-Anschluss des ersten Anschlusselements (8) und das zweite Anschlusselement (7) mit einer Dosiervorrichtung (1) und der Hohlnadel (5) verbunden ist, und
d) zwischen dem dritten Fluid-Anschluss des ersten Anschlusselements (8) und dem zweiten Anschlusselement (7) ein Ventil (2) angeordnet ist.

2. Vorrichtung nach Anspruch 1, **dadurch gekennzeichnet, dass** das Ventil (2) als Magnetventil, insbesondere als Magnetventil mit Nennvolumen kleiner als 0.1 ml ausgebildet ist.

3. Vorrichtung nach Anspruch 1 oder 2, **dadurch gekennzeichnet, dass** das zweite Anschlusselement (7) drei Fluidanschlüsse umfasst, wobei
- ein erster Fluidanschluss des zweiten Anschlusselements (7) mit dem Ventil (2),
- ein zweiter Fluidanschluss des zweiten Anschlusselements (7) mit der Dosiervorrichtung (1) und
- ein dritter Fluidanschluss des zweiten Anschlusselements (7) mit der Hohlnadel (5) verbunden ist.

4. Vorrichtung nach einem der Ansprüche 1 bis 3, **dadurch gekennzeichnet, dass** die Dosiervorrichtung (1) einen Spritzenkörper (1.2) und einen Stössel (1.1) umfasst und insbesondere motorisch betätigbar ist.

5. Vorrichtung nach einem der Ansprüche 1 bis 4, **dadurch gekennzeichnet, dass** die Dosiervorrichtung (1) auswechselbar ausgebildet ist, insbesondere durch Dosiervorrichtungen (1) verschiedener Volumina ersetzbar ist.

6. Vorrichtung nach einem der Ansprüche 1 bis 5, **dadurch gekennzeichnet, dass** die Hohlnadel (5), die Dosiervorrichtung (1) und das Ventil (2) auf einer verfahrbaren Halterung (25) befestigt sind.

7. Vorrichtung nach Anspruch 6, **dadurch gekennzeichnet, dass** die Halterung (25) in drei verschiedenen Raumrichtungen verfahrbar ist.

8. Vorrichtung nach Anspruch 5 oder 6, **dadurch gekennzeichnet, dass** die beiden Anschlusselemente (7, 8) auf der verfahrbaren Halterung (25) befestigt sind.

9. Vorrichtung nach einem der Ansprüche 1 bis 7, **dadurch gekennzeichnet, dass** eine erste Fluid-Verbindung zwischen dem Fluidanschluss des zweiten Anschlusselements (8) und der Dosiervorrichtung 1 und/oder eine zweite Fluid-Verbindung zwischen dem zweiten Anschlusselement (7) und der Hohlnadel (1) aus einem starren Material, insbesondere aus einem Metall oder einem festen Kunststoff ausgebildet ist.

10. Vorrichtung nach einem der Ansprüche 1 bis 9, **dadurch gekennzeichnet, dass** das zweite Anschlusselement (7) über eine dritte Fluid-Verbindung mit der Hohlnadel (5) verbunden ist, wobei die dritte Fluid-Verbindung zur Variation eines Probenvolumens mit Vorteil auswechselbar ausgebildet ist.

11. Vorrichtung nach Anspruch 10, **dadurch gekennzeichnet, dass** der Load-Loop (6) und die Hohlnadel (5) einstückig ausgebildet sind.

12. Vorrichtung nach einem der Ansprüche 1 bis 11, **dadurch gekennzeichnet, dass** das Messgerät einen Chromatografen, insbesondere einen Flüssigchromatografen, umfasst.

13. Vorrichtung nach einem der Ansprüche 1 bis 12, **dadurch gekennzeichnet, dass** sie zur Reinigung der Hohlnadel (5) ein Waschmodul (15) mit einem Abfalltank (17) und mindestens eine Tauchposition (18, 19) umfasst.

14. Vorrichtung nach einem der Ansprüche 1 bis 13, wobei sie ein Injektionsventil (22) mit einem Injektionsport (21) umfasst und die Probe mit der im Injektionsport (21) positionierten Hohlnadel (5) via das Injektionsventil (22) in den Probenaufnahmeeingang des Messgeräts abgebbar ist.

15. Verfahren zur Reinigung einer Vorrichtung zur Aufnahme einer Probe und zur Abgabe der Probe in einen Probenaufnahmeeingang eines Messgeräts mit einer Hohlnadel (5), einer ersten Zuleitung (9) für eine erste Waschflüssigkeit, einer zweiten Zuleitung (10) für eine zweite Waschflüssigkeit sowie einer Dosiervorrichtung (1), insbesondere einer Vorrichtung nach einem der Ansprüche 1 bis 16, **dadurch gekennzeichnet, dass** mit der ersten Waschpumpe (11) die erste Waschflüssigkeit und mit der zweiten Waschpumpe (12) die zweite Waschflüssigkeit insbesondere sequentiell an der Dosiervorrichtung (1) vorbei durch die Hohlnadel (5) hindurch gepumpt wird.

## Claims

1. Device for collecting a sample and for depositing the sample in a sample-receiving port of a measuring apparatus,
a) comprising a first connection element (8) with three connections for fluid, and a second connection element (7), and a hollow needle (5) for collecting and depositing the sample,
b) wherein a first feed line (9) for a first washing liquid is connected via a first pump to a first connection for fluid of the first connection element (8), and a second feed line (10) for a second washing liquid is connected via a second pump to a second connection for fluid of the first connection element (8),
**characterized in that**
c) a connection for fluid of the second connection element (7) is connected to the third connection for fluid of the first connection element (8), and the second connection element (7) is connected to a dosing device (1) and to the hollow needle (5), and
d) a valve (2) is arranged between the third connection for fluid of the first connection element (8) and the second connection element (7).

2. Device according to Claim 1, **characterized in that** the valve (2) is designed as a solenoid valve, in particular as a solenoid valve with a nominal volume of less than 0.1 ml.

3. Device according to claim 1 or 2, **characterized in that** the second connection element (7) comprises three connections for fluid, wherein
- a first connection for fluid of the second connection element (7) is connected to the valve (2),
- a second connection for fluid of the second connection element (7) is connected to the dosing device (1), and
- a third connection for fluid of the second connection element (7) is connected to the hollow needle (5).

4. Device according to one of claims 1 to 3, **characterized in that** the dosing device (1) comprises a syringe body (1.2) and a ram (1.1) and can be actuated in particular by a motor.

5. Device according to one of claims 1 to 4, **characterized in that** the dosing device (1) is exchangeable and may in particular be replaced by dosing devices (1) of different volumes.

6. Device according to one of claims 1 to 5, **characterized in that** the hollow needle (5), the dosing device (1) and the valve (2) are secured on a movable support (25).

7. Device according to claim 6, **characterized in that** the support (25) is movable in three different spatial directions.

8. Device according to claim 5 or 6, **characterized in that** the two connection elements (7, 8) are secured on the movable support (25).

9. Device according to one of claims 1 to 7, **characterized in that** a first fluid connection between the connection for fluid of the second connection element (8) and the dosing device (1) and/or a second fluid connection between the second connection element (7) and the hollow needle (1) is made of a rigid material, in particular of a metal or a solid plastic.

10. Device according to one of claims 1 to 9, **characterized in that** the second connection element (7) is connected to the hollow needle (5) via a third fluid connection, wherein the third fluid connection is advantageously exchangeable in order to permit variation of a sample volume.

11. Device according to Claim 10, **characterized in that** the load loop (6) and the hollow needle (5) are provided as a single piece.

12. Device according to one of claims 1 to 11, **characterized in that** the measuring apparatus comprises a chromatograph, in particular a liquid chromatograph.

13. Device according to one of claims 1 to 12, **characterized in that**, in order to clean the hollow needle (5), it comprises a wash module (15) with a waste tank (17) and at least one immersion position (18, 19).

14. Device according to one of claims 1 to 13, wherein it comprises an injection valve (22) with an injection port (21), and the sample, with the hollow needle (5) positioned in the injection port (21), can be discharged via the injection valve (22) into the sample-receiving port of the measuring apparatus.

15. Method for cleaning a device used for collecting a sample and for depositing the sample in a sample-receiving port of a measuring apparatus comprising a hollow needle (5), a first feed line (9) for a first washing liquid, a second feed line (10) for a second washing liquid, and a dosing device (1), in particular a device according to one of claims 1 to 16, **characterized in that** the first washing liquid is pumped by the first wash pump (11) and the second washing liquid is pumped by the second wash pump (12), in particular sequentially, past the dosing device (1) and through the hollow needle (5).

## Revendications

1. Dispositif pour recevoir un échantillon et pour déposer l'échantillon dans une entrée de réception d'échantillon d'un appareil de mesure,
a) comprenant un premier élément de raccord (8) avec trois raccords de fluide et un deuxième élément de raccord (7) ainsi qu'une aiguille creuse (5) pour recevoir et déposer l'échantillon,
b) une première conduite d'amenée (9) pour un premier liquide de lavage étant connectée par le biais d'une première pompe à un premier raccord de fluide du premier élément de raccord (8) et une deuxième conduite d'amenée (10) pour un deuxième liquide de lavage étant connectée par le biais d'une deuxième pompe à un deuxième raccord de fluide du premier élément de raccord (8), **caractérisé en ce que**
c) un raccord de fluide du deuxième élément de raccord (7) est connecté au troisième raccord de fluide du premier élément de raccord (8) et le deuxième élément de raccord (7) est connecté à un dispositif de dosage (1) et à l'aiguille creuse (5), et
d) entre le troisième raccord de fluide du premier élément de raccord (8) et le deuxième élément de raccord (7) est disposée une soupape (2).

2. Dispositif selon la revendication 1, **caractérisé en ce que** la soupape (2) est réalisée sous forme de vanne magnétique, notamment de vanne magnétique avec un volume nominal inférieur 0,1 ml.

3. Dispositif selon la revendication 1 ou 2, **caractérisé en ce que** le deuxième élément de raccord (7) comprend trois raccords de fluide,
- un premier raccord de fluide du deuxième élément de raccord (7) étant connecté à la soupape (2),
- un deuxième raccord de fluide du deuxième élément de raccord (7) étant connecté au dispositif de dosage (1), et
- un troisième raccord de fluide du deuxième élément de raccord (7) étant connecté à l'aiguille creuse (5).

4. Dispositif selon l'une quelconque des revendications 1 à 3, **caractérisé en ce que** le dispositif de dosage (1) comprend un corps de seringue (1.2) et un poussoir (1.1) et peut notamment être actionné par moteur.

5. Dispositif selon l'une quelconque des revendications 1 à 4, **caractérisé en ce que** le dispositif de dosage (1) est réalisé de manière interchangeable, notamment peut être remplacé par des dispositifs de dosage (1) de différents volumes.

6. Dispositif selon l'une quelconque des revendications 1 à 5, **caractérisé en ce que** l'aiguille creuse (5), le dispositif de dosage (1) et la soupape (2) sont fixés sur une fixation déplaçable (25).

7. Dispositif selon la revendication 6, **caractérisé en ce que** la fixation (25) peut être déplacée dans trois directions spatiales différentes.

8. Dispositif selon la revendication 5 ou 6, **caractérisé en ce que** les deux éléments de raccord (7, 8) sont fixés sur la fixation déplaçable (25).

9. Dispositif selon l'une quelconque des revendications 1 à 7, **caractérisé en ce qu'**une première liaison fluidique entre le raccord de fluide du deuxième élément de raccord (7) et le dispositif de dosage 1 et/ou une deuxième liaison fluidique entre le deuxième élément de raccord (7) et l'aiguille creuse (1) est/sont réalisées en un matériau rigide, notamment en métal ou un plastique dur.

10. Dispositif selon l'une quelconque des revendications 1 à 9, **caractérisé en ce que** le deuxième élément de raccord (7) est connecté à l'aiguille creuse (5) par le biais d'une troisième liaison fluidique, la troisième liaison fluidique étant réalisée avantageusement de manière interchangeable pour faire varier un volume d'échantillon.

11. Dispositif selon la revendication 10, **caractérisé en ce que** la boucle de charge (6) et l'aiguille creuse (5) sont réalisées d'une seule pièce.

12. Dispositif selon l'une quelconque des revendications 1 à 11, **caractérisé en ce que** l'appareil de mesure comprend un chromatographe, notamment un chromatographe à fluide.

13. Dispositif selon l'une quelconque des revendications 1 à 12, **caractérisé en ce qu'**il comprend, pour nettoyer l'aiguille creuse (5), un module de lavage (15) avec un réservoir de rebut (17) et au moins une position d'immersion (18, 19).

14. Dispositif selon l'une quelconque des revendications 1 à 13, comprenant une soupape d'injection (22) avec un orifice d'injection (21), l'échantillon avec l'aiguille creuse (5) positionnée dans l'orifice d'injection (21) pouvant être déposé par le biais de la soupape d'injection (22) dans l'entrée de réception d'échantillon de l'appareil de mesure.

15. Procédé de nettoyage d'un dispositif pour recevoir un échantillon et pour déposer l'échantillon dans une entrée de réception d'échantillon d'un appareil de mesure, comprenant une aiguille creuse (5), une première conduite d'amenée (9) pour un premier liquide de lavage, une deuxième conduite d'amenée (10) pour un deuxième liquide de lavage ainsi qu'un dispositif de dosage (1), en particulier un dispositif selon l'une quelconque des revendications 1 à 14, **caractérisé en ce que** le premier liquide de lavage est pompé à l'aide de la première pompe de lavage (11) et le deuxième liquide de lavage est pompé à l'aide de la deuxième pompe de lavage (12), notamment de manière séquentielle et passant a coté du dispositif de dosage (1) à travers l'aiguille creuse (5).
